Europäisches Patentamt

European Patent Office

Office européen des brevets

(11) Publication number: **0 569 129 A1**

## EUROPEAN PATENT APPLICATION

(21) Application number: **93302654.4**

(22) Date of filing: **05.04.93**

(51) Int. Cl.5: **G01P 13/02**

(30) Priority: **01.05.92 GB 9209507**

(43) Date of publication of application:
**10.11.93 Bulletin 93/45**

(84) Designated Contracting States:
**DE FR GB**

(71) Applicant: **CENTRAL RESEARCH LABORATORIES LIMITED**
**Dawley Road**
**Hayes, Middlesex, UB3 1HH(GB)**

(72) Inventor: **Wales, James Lance Sander**
**31 Wellington Road**
**Sandhurst, Berkshire GU17 8AU(GB)**

(74) Representative: **Osborne, David Ernest**
**Thorn EMI Patents Limited**
**Central Research Laboratories**
**Dawley Road**
**Hayes, Middlesex UB3 1HH (GB)**

(54) **Determination of fluid flow direction.**

(57) Fluid flow direction is determined by the use of the angular dependence of the normalised heat transfer coefficient around a body to determine the heading of the fluid flow in which it is placed. The body (2) has a central heater (10) and thermocouples (8) distributed around its surface under a protective layer (4). The thermocouples are connected to a multiplexer in order to determine the position of the stagnation point from the temperature distribution. For a helicopter, forward speed can be calculated from this position, given the downwash speed.

Fig.1.

EP 0 569 129 A1

This invention relates to a method and apparatus for determining fluid flow direction, and particularly but not exclusively for determining airflow direction over an aircraft such as a helicoptor, for example in order to measure the velocity or forward speed of the helicoptor.

It is important for a helicoptor to have means for measuring accurately relative air speeds as low as 5m s⁻¹. One known method of measuring air speed involves a small vane which is used to orient a pitot tube to a position which gives a maximum pressure reading. Measurement of the orientation of the pitot tube gives the airflow direction. Since the velocity of the downwash created by the rotor blades is known from the speed of the blades, it is possible to derive the relative airspeed and its direction from the angle of the net airspeed vector thus measured. However, experience has shown that pitot tubes are inaccurate below air speeds of about 15m s⁻¹ because of the dominance of the downwash which involves considerable turbulence or noise. Other problems include a tendency for ice to form on the pitot tube, and the effects of friction or eddies.

Other well known wind speed indicators are based on beat transfer and include hot wire annemometers and devices involving thermistors. These operate effectively in the lower range of wind speeds required, but are of a delicate or fragile nature and cannot be used in an environment such as that existing around a helicopter.

The present invention aims to alleviate these problems.

To this end, the present invention broadly consists in the use of the angular dependency of the normalized heat transfer coefficient around a body to determine the heading of the fluid flow in which it is placed.

More specifically, from one aspect the present invention consists in apparatus for determining the direction of a fluid flow comprising:

a body of thermally conductive material for placing in the fluid flow;

heating means for heating the body; and

measuring means for measuring heat transfer from the body to the fluid at at least two positions.

The apparatus preferably also comprises processing means for processing the measured heat transfer whereby to calculate the angle of incidence of the fluid on the body with respect to a predetermined reference direction.

Conveniently, the measuring means comprises means for measuring the temperature at or adjacent a surface of the body which is arranged to be exposed to the fluid flow. For example, the measuring means may comprise suitably positioned thermocouples.

From another aspect, the present invention consists in a method of determining the direction of a fluid flow comprising:-

placing a body of thermally conductive material in the fluid flow;

supplying heat to the body;

measuring the heat transfer from the body to the fluid at at least two positions; and

processing the measured heat transfer whereby to determine the angle of incidence of the fluid on the body with respect to a predetermined reference direction.

Conveniently, the heat transfer is measured by measuring the temperature at or adjacent a surface of the body arranged to be exposed to the fluid flow.

In order that the invention may be more readily understood, reference will now be made, by way of example, to the accompanying diagrammatic drawings, in which:

Figure 1 is a cross-sectional view of a cylinder according to one embodiment of the invention;

Figure 2 is a schematic graph showing temperature against angular distance clockwise around the body of Figure 1 from the reference point E;

Figure 3 is a flow diagram of the operations which may be performed when apparatus incorporating the cylinder of Figure 1 is in use; and

Figures 4 and 5 are plan views of a former and metallic plate for constructing a body according to an alternative embodiment of the invention.

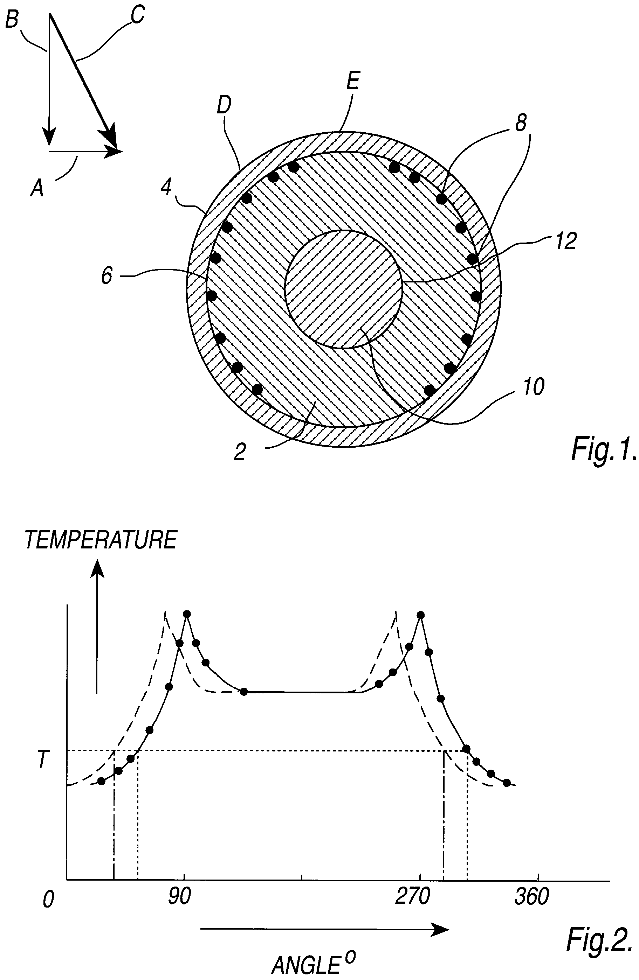

Referring to Figure 1, apparatus for determining the direction of a fluid flow includes a body comprising a hollow cylinder 2 of thermally conductive material such as aluminium alloy or other metal, and a thin protective layer 4 , ouch as of nickel, covering the outer side wall 6 of the cylinder 2.

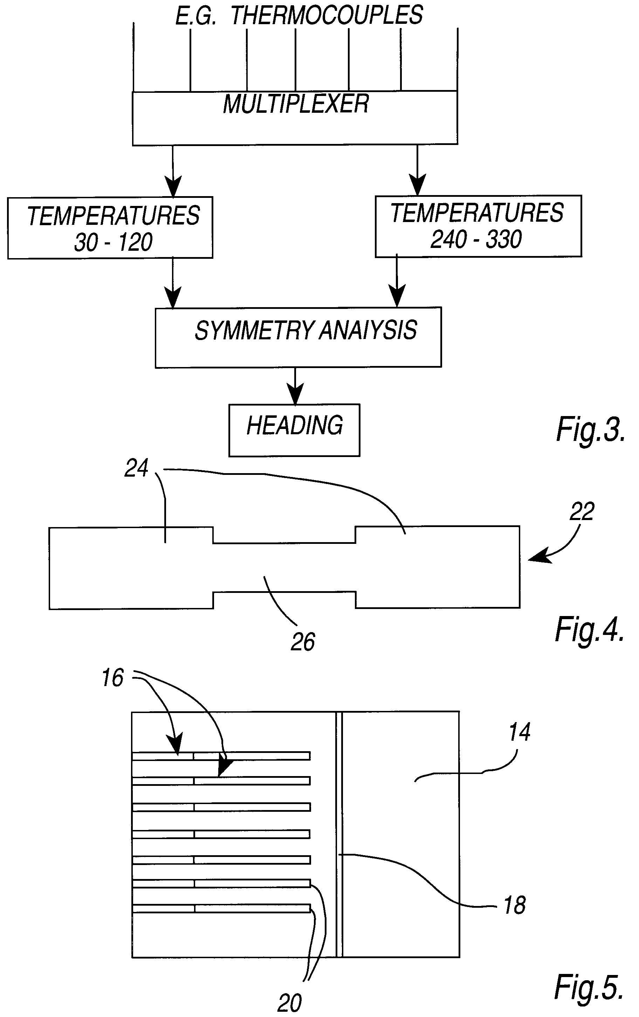

A number of thermocouples 8 are distributed around the cylinder 2 below the outer layer 4 and close to it. The thermocouples are positioned symmetrically on either side of a reference point between the angles of about 30° and 120°, and 240 and 330°, and are connected to a multiplexer as shown in Figure 3.

A cartridge heater 10 fits closely within the cylinder 2 so as to make thermal contact with the inner side wall 12.

In use, the body is mounted in a flow of fluid. For example, it may be mounted in air flow on the end of a support arm projecting from a helicopter body, such that its longitudinal axis extends sideways, that is, perpendicular to the upward and forward direction of flight.

During forward flight, the net airspeed vector C is given by the sum of the downwash vector B and the airspeed vector A. The angle of incidence of the net airspeed vector on the body 2 determines the position of the stagnation point D. The heat transfer characteristic of any point around the body varies with its angular distance from the stagnation point D, and thus the temperature measurements can be used to fix the position of the stagnation point.

In the case of a cylinder, angular position between 30° to 120°, and 240° to 330° have been chosen since the temperature distribution in these regions has been found to be more stable and more highly dependant upon angular distance from the stagnation point than in other regions.

Figure 2 shows in continuous lines the temperature distribution around the body when the helicopter is stationary, such that the net airspeed vector is the same as the downwash vector and the stagnation point is at a reference position E, or 0°. Referring to Figure 3, the thermocouples are connected to a multiplexer. A temperature value is selected from measurements taken in the range of 30 to 120°, and the corresponding angular location between 240 and 330° which is at the same temperature is found by interpolation of the measurements taken in that range. The two angular positions will be symmetrical about the stagnation point, and thus the angular shift of the stagnation point from the reference position can be calculated by analysing the symmetry.

In the example of Figure 2, symmetry analysis might involve choosing a temperature T which gives the angles 60° and 300°. The angular shift is [60-(360-300)]/2 = 0°. When the angle of the net airspeed vector changes, for example when the helicopter is moving forward, the temperature distribution may be that shown in broken lines in Figure 2. Choosing the same temperature, angles of 40° and 280° are found. The angular shift is now [40 - (360-280)]/2 = -20° (i.e. anticlockwise rotation of 20°).

The angular shift corresponds to the shift of the net airspeed vector, with a negative angular shift, as shown by the vectors of Figure 1, corresponding to a forward speed. The forward speed of the helicopter, given the downwash speed can be calculated thus:

forward speed = downwash speed x tan 20°. At low speeds, a typical downwash speed is 25m $s^{-1}$, giving a forward speed of 9m $s^{-1}$. The symmetry analysis may involve repeating the above process for several different temperature values to give an average result.

If it is required also to measure the airspeed vector in any other plane, for example to measure a side wind, one or two other such bodies may be mounted such that the long axis of the bodies are perpendicular to each other.

In the embodiment of Figures 4 and 5, a body is formed from a thin metallic plate 14 having a plurality of parallel thermocouple pairs 16 printed thereon. An electrically resistive heating track 18 is printed on the plate 14 perpendicular to the thermocouple pairs 16 and adjacent their hot junctions 20. A former 22 comprises two cylindrical end portions 24 and a connecting portion 26 of smaller diameter. The plate 14 is wrapped around the former 22 in such a manner that the hot junctions 20 and the heating track 18 are on the inside, and overlap the connection portion 26 so as to be thermally isolated from the former. The former may be used to support the body in the fluid flow so as to determine its direction as already described above.

Whilst various embodiments of the invention have been described, it will be appreciated that modifications may be made without departing from the scope of the invention.

For example, the body may be provided with only two thermocouples situated symmetrically about a reference point. In this case, the temperature measurements may be compared with a predetermined distribution to calculate the position of the stagnation point with respect to the position of each thermocouple.

Additionally, the magnitude of the airspeed vector could be found from the magnitude of the heat transfer or cooling effect of the body. For example, measured temperatures could be compared with predetermined temperatures corresponding to various magnitudes of airspeed.

It may be desirable to limit targential heat flow within the cylinder walls, and this could be achieved, for example, by radially extending thin layers of insulating material distributed around the cylinder.

Bodies of other geometries may be used to derive the heading of the relative airspeed vector, for example, a flat plate or a cone heated from the centre.

**Claims**

1. Apparatus for determining the direction of a fluid flow comprising:
   a body of thermally conductive material for placing in the fluid flow;
   heating means for heating the body; and
   measuring means for measuring heat transfer from the body to the fluid at at least two positions.

2. Apparatus as claimed in claim 1, including processing means for processing the measured heat transfer whereby to calculate the angle of incidence of the fluid on the body with respect to a predetermined reference direction.

3.  Apparatus as claimed in claim 1 or 2, wherein the measuring means comprises means for measuring the temperature at or adjacent a surface of the body which is arranged to be exposed to the fluid flow.

4.  Apparatus as claimed in claim 3, wherein the means for measuring the temperature comprises a plurality of thermocouples.

5.  A method of determining the direction of a fluid flow comprising:-
    placing a body of thermally conductive material in the fluid flow;
    supplying heat to the body;
    measuring the heat transfer from the body to the fluid at at least two positions; and
    processing the measured heat transfer whereby to determine the angle of incidence of the fluid on the body with respect to a predetermined reference direction.

6.  A method as claimed in claim 5, wherein the heat transfer is measured by measuring the temperature at or adjacent a surface of the body arranged to be exposed to the fluid flow.

Fig.1.

Fig.2.

E.G. THERMOCOUPLES

MULTIPLEXER

TEMPERATURES
30 - 120

TEMPERATURES
240 - 330

SYMMETRY ANAIYSIS

HEADING

*Fig.3.*

*Fig.4.*

*Fig.5.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3 995 480 (G.A.EDGERTON) <br> * column 2, line 8 - line 54; figures 2-4 * | 1-6 | G01P13/02 |

-----

TECHNICAL FIELDS
SEARCHED (Int. Cl.5 )

G01P

The present search report has been drawn up for all claims

| Place of search | Date of completion of the search | Examiner |
|---|---|---|
| THE HAGUE | 24 AUGUST 1993 | HANSEN P. |

EPO FORM 1503 03.82 (P0401)